# EUROPÄISCHE PATENTANMELDUNG

(11) **EP 0 702 214 A1**
(43) Veröffentlichungstag der Anmeldung: **20.03.1996**
(21) Anmeldenummer: 95113146.5
(22) Anmeldetag: 22.08.1995
(51) Int. Cl.: G01F 9/00

(54) **Verfahren zur Bestimmung des Kraftstoffverbrauchs von Kraftfahrzeugen**

(30) Priorität: 13.09.1994 DE 4432531
(71) Anmelder: ROBERT BOSCH GMBH, D-70442 Stuttgart (DE)
(72) Erfinder: Dannenmann, Artur, D-73035 Goeppingen (DE); Roth, Rolf, Dipl.-Ing., D-73119 Zell U.a. (DE); Fellhauer, Michael, Dipl.-Ing., D-73312 Geislingen (DE)

(57) **Zusammenfassung**

Es wird ein Verfahren zur Bestimmung des Kraftstoffverbrauchs eines Kraftfahrzeugs (11) vorgeschlagen, bei dem eine Gewichtsänderung des Kraftfahrzeugs als Maß für den Verbrauch erfaßt wird. Gemäß einem bevorzugten Ausführungsbeispiel wird in einen ersten Schritt zunächst wenigstens ein Teil des Gewichts des Kraftfahrzeugs ermittelt. Anschließend wird in einem zweiten Schritt das Kraftfahrzeug (11) mit einem vorgegebenen Zusatzgewicht (16) belastet, das vorzugsweise in einem Kraftstoffbehälter (15) des Kraftfahrzeugs (11) angeordnet wird. Während der anschließenden Kraftstoffverbrauchsermittlung wird das Kraftfahrzeug (11) so lange betrieben, bis das Ausgangsgewicht wieder erreicht ist. Der wesentliche Vorteil des erfindungsgemäßen Verfahrens liegt darin, daß ein Eingriff in das Kraftstoffsystem des Kraftfahrzeugs (11) sowie ein Hantieren mit Kraftstoff zur Durchführung der Kraftstoffverbrauchsmessung nicht erforderlich sind.

## Beschreibung

### Stand der Technik

Die Erfindung geht aus von einem Verfahren zur Bestimmung des Kraftstoffverbrauchs von Kraftfahrzeugen nach der Gattung des unabhängigen Anspruchs. Ein bekanntes Verfahren beruht auf einem Einsatz eines Durchflußmeßgeräts, das den momentanen Kraftstoffverbrauch anzeigt. Eine Integration des Meßsignals ermöglicht die Angabe eines verbrauchten Kraftstoffvolumens. Ein anderes bekanntes Verfahren ermöglicht durch den Einsatz eines Meßglases unmittelbar die Angabe des Volumens.

Die bekannten Verfahren machen einen Eingriff in den Kraftstoffkreislauf des Kraftfahrzeugs erforderlich.

Der Erfindung liegt die Aufgabe zugrunde, ein Verfahren zur Bestimmung des Kraftstoffverbrauchs von Kraftfahrzeugen anzugeben, das ohne einen Eingriff in den Kraftstoffkreislauf auskommt.

Die Aufgabe wird durch die im unabhängigen Anspruch angegebenen Merkmale gelöst.

### Vorteile der Erfindung

Das erfindungsgemäße Verfahren zur Bestimmung des Kraftstoffverbrauchs von Kraftfahrzeugen weist den Vorteil auf, daß die Gefahr entfällt, die durch das Hantieren mit Kraftstoff stets gegeben ist. Die bislang erforderliche Adaptionszeit durch Anbringen entweder eines Durchflußmessers oder eines Meßglases entfallt weitgehend. Erfindungsgemäß ist vorgesehen, daß eine Gewichtsänderung des Kraftfahrzeugs als Maß für den Kraftstoffverbrauch erfaßt wird. Das Gewicht des Kraftfahrzeugs wird zu Beginn und am Ende der Verbrauchsmessung ermittelt. Die Differenz ist ein Maß für den verbrauchten Kraftstoff. Sofern das gesamte Gewicht des Kraftfahrzeugs mit der zur Verfügung stehenden Waage erfaßt werden kann, gibt die Gewichtsänderung unmittelbar das Gewicht des verbrauchten Kraftstoffs an. Sofern eine Waage zur Verfügung steht, die eine nur teilweise Erfassung des Fahrzeuggewichts ermöglicht, beispielsweise das auf einer Achse lastende Gewicht, dann kann durch Kalibriermessungen für jeden einzelnen Fahrzeugtyp von der ermittelten Gewichtsdifferenz auf das tatsächliche Gewicht des verbrauchten Kraftstoffs geschlossen werden. Zur Durchführung des erfindungsgemäßen Verfahrens ist eine Waage erforderlich, die eine Gewichtsänderung mit der erforderlichen Auflösung zu ermitteln gestattet. Die absolute Genauigkeit der Gewichtsangabe spielt dagegen keine Rolle.

Vorteilhafte Weiterbildungen und Ausgestaltungen des erfindungsgemäßen Verfahrens ergeben sich aus abhängigen Ansprüchen.

Eine vorteilhafte Ausgestaltung sieht vor, daß das Kraftfahrzeug zunächst gewogen wird. Anschließend wird ein vorgegebenes Volumen des für die Verbrauchsmessung vorgesehenen Kraftstoffs getankt. Das Kraftfahrzeug wird danach solange betrieben, bis das Ausgangsgewicht wieder erreicht ist. Diese Maßnahme ist insbesondere geeignet in Verbindung mit einer Waage, die nicht vollständig das Kraftfahrzeuggewicht zu ermitteln gestattet. Dennoch kann aus der Gewichtsänderung das tatsächlich verbrauchte Volumen erhalten werden.

Eine besonders vorteilhafte Ausgestaltung, die jeglichen Kontakt mit Kraftstoff vermeidet, sieht vor, daß das Fahrzeug zunächst gewogen wird. Anschließend wird das Kraftfahrzeug mit einem bekannten Zusatzgewicht belastet. Das Kraftfahrzeug wird anschließend solange betrieben, bis das Ausgangsgewicht wieder erreicht ist. Die von dem Zusatzgewicht verursachte Gewichtsänderung des Kraftfahrzeugs ist um so genauer ein direktes Maß für das Volumen des Kraftstoffs, je näher das Zusatzgewicht am Schwerpunkt des im Krafstoffbehälter befindlichen Kraftstoffs liegt. Eine besonders vorteilhafte Ausgestaltung dieser Maßnahme sieht deshalb vor, daß das Zusatzgewicht in den Kraftstoffbehälter des Kraftfahrzeugs eingebracht wird.

Eine zweckmäßige Weiterbildung des erfindungsgemäßen Verfahrens sieht vor, daß die Gewichtsänderung in einem Prüfstand erfaßt wird. Insbesondere geeignet ist ein Rollenprüfstand, der beispielsweise die Ermittlung der Raddrehzahl sowie der Kraftfahrzeugleistung ermöglicht. Vorzugsweise ist der Rollenprüfstand mit der erforderlichen Waage ausgestattet. Der Rollenprüfstand ermöglicht die Angabe des Kraftstoffverbrauchs bezogen auf eine vorgegebene Strecke ebenso wie die Angabe eines Kraftstoffverbrauchs bezogen auf die Geschwindigkeit oder die Kraftfahrzeugleistung.

Weitere vorteilhafte Ausgestaltungen und Weiterbildungen des erfindungsgemäßen Verfahrens ergeben sich aus weiteren abhängigen Ansprüchen und aus der folgenden Beschreibung.

### Zeichnung

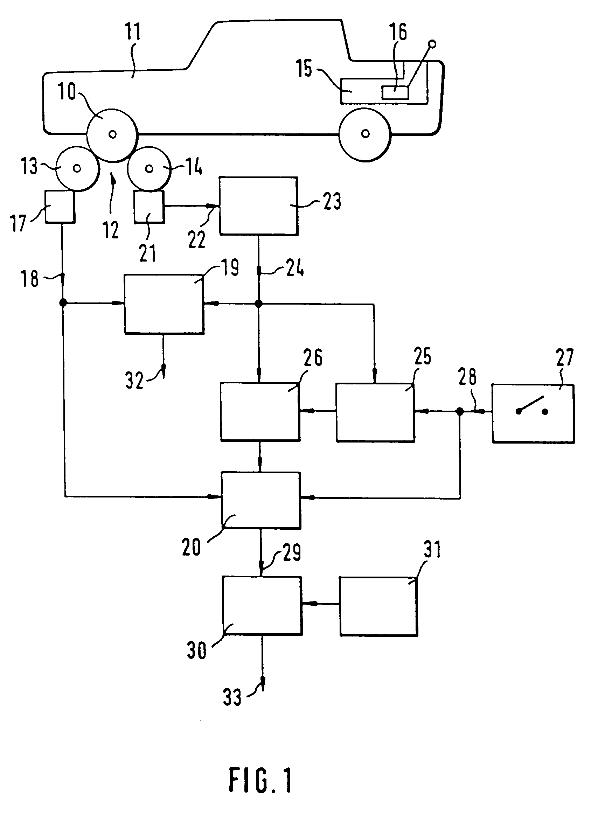

In der Figur ist ein Blockschaltbild einer Vorrichtung zur Bestimmung des Kraftstoffverbrauchs von Kraftfahrzeugen gezeigt, anhand dem das erfindungsgemäße Verfahren erläutert wird.

Ein Vorderrad 10 eines Kraftfahrzeugs 11, dessen Kraftstoffverbrauch bestimmt werden soll, steht in einem Rollenprüfstand 12, der eine erste und zweite Walze 13, 14 enthält. Das Kraftfahrzeug 11 enthält einen Kraftstoffbehälter 15, in dem ein Zusatzgewicht 16 angeordnet ist.

In Wirkverbindung mit der ersten Walze 13 des Rollenprüfstands 12 steht ein Drehzahlgeber 17, der ein Drehzahlsignal 18 an eine Momentanverbrauchermittlung 19 sowie an einen Integrator 20 abgibt.

Die zweite Walze 14 des Rollenprüfstands 12 steht in Wirkverbindung mit einem Gewichtsgeber 21, der ein Sensorsignal 22 an eine Gewichtsaufbereitungsschaltung 23 abgibt. Die Gewichtsaufbereitungsschaltung 23 stellt ein Gewichtssignal 24 bereit, das der Momentanverbrauchsermittlung 19, einem Referenzgewichtsgeber 25 sowie einem Vergleicher 26 zugeführt ist.

Ein von einer Eingabe 27 abgegebenes Schaltsignal 28 wird dem Referenzgewichtsgeber 25 sowie dem Integrator 20 zugeleitet. Ein Ausgangssignal 29 des Integrators 20 wird einer Durchschnittsverbrauchsermittlung 30 zugeleitet, die als weiteres Eingangssignal ein von einem Kraftstoffvolumengeber 31 bereitgestelltes Signal zugeführt erhält.

Die Momentanverbrauchsermittlung 19 und die Durchschnittsverbrauchsermittlung 30 geben an ihren Ausgängen entsprechend ein Momentanverbrauchssignal 32 und ein Durchschnittsverbrauchssignal 33 ab.

Anhand des in der Figur gezeigten Blockschaltbilds wird das erfindungsgemäße Verfahren näher erläutert:

Das Kraftfahrzeug 11, dessen Kraftstoffverbrauch zu bestimmen ist, wird mit der Antriebsachse auf den Rollenprüfstand 12 gefahren. Im gezeigten Ausführungsbeispiel ist angenommen, daß die Antriebsachse am Vorderrad 10 angeordnet ist. Über die zweite Walze 14 erfaßt der Gewichtsgeber 21 zumindest einen Teil des Gewichts des Kraftfahrzeugs 11. Das Gewicht des Kraftfahrzeugs 11 teilt sich in Abhängigkeit von der Schwerpunktlage auf das Vorderrad 10 und auf das nicht näher bezeichnete Hinterrad auf. Der Gewichtsgeber 21 gibt das von ihm bereitgestellte Sensorsignal 22 an die Gewichtsaufbereitungsschaltung 23 ab, die das Gewichtssignal 24 an ihrem Ausgang zur Verfügung stellt.

In der einfachsten Ausführung des erfindungsgemäßen Verfahrens ist mit der bislang beschriebenen Vorrichtung bereits die Bestimmung des Kraftstoffverbrauchs des Kraftfahrzeugmotors 11 möglich. Nach dem Einschalten des Kraftfahrzeugs 11 nimmt das Gewicht des Kraftfahrzeugs 11 durch den Kraftstoffverbrauch ab. Entsprechend ändert sich das Gewichtssignal 24. Die zeitliche Änderung des Gewichtssignals 24 kann bereits als Maß für den Kraftstoffverbrauch des Kraftfahrzeugs 11 gewertet werden. Sofern in einer Kalibriermessung die Gewichtsänderung einer vorgegebenen Volumenänderung des im Kraftstoffbehälter 15 befindlichen Kraftstoffs ermittelt wurde, kann das Gewichtssignal 24 unmittelbar als Kraftstoffverbrauch bezogen auf die Zeit ausgegeben werden.

Sofern das Kraftfahrzeug auf einer Waage steht, die das Gewicht des Kraftfahrzeugs 11 vollständig erfaßt, kann die Kalibriermessung entfallen, da die Gewichtsänderung unmittelbar der Volumenänderung des Kraftstoffs entspricht.

Eine geschwindigkeits- oder leistungsbezogene Kraftstoffverbrauchsmessung ist mit der Momentanverbrauchsermittlung 19 möglich. Die Momentanverbrauchsermittlung führt im wesentlichen eine Division durch, bei der das Gewichtssignal 24 durch das vom Drehzahlgeber 17 bereitgestellte Drehzahlsignal 18 dividiert wird. Das Drehzahlsignal 18 ist ein Maß für die Geschwindigkeit des Kraftfahrzeugs 11 und in Abhängigkeit von weiteren, nicht näher gezeigten Ausgestaltungen des Rollenprüfstands 12 ein Maß für die Leistung des Kraftfahrzeugs 11. Der drehzahlbezogene oder geschwindigkeitsbezogene oder leistungsbezogene Verbrauch wird von der Momentanverbrauchsermittlung 19 als Momentanverbrauchssignal 32 zur Verfügung gestellt.

Eine Vereinfachung der Kraftstoffverbrauchsmessung sowie eine erweiterte Möglichkeit der Ermittlung von weiteren Werten ergeben sich durch die in den Figur gezeigten weiteren Komponenten. Eine Kraftstoffverbrauchsmessung mit einem vorgegebenen Volumen des Kraftstoffs ist mit dem Vergleicher 26 möglich, dem das Gewichtssignal 24 sowie das von dem Referenzgewichtsgeber 25 bereitgestellte Referenzsignal zugeführt sind. Zu Beginn der Messung wird das Gewichtssignal 24 im Referenzgewichtsgeber 25 gespeichert. Der Beginn der Messung und das Speichern werden vorzugsweise über die Eingabe 27 manuell von einer Bedienperson ausgelöst. Die Eingabe 27 gibt das Schaltsignal 28 zum Speichern des Anfangsgewichts im Referenzgewichtsgeber 25 ab. Jetzt wird ein vorgegebenes Volumen des Kraftstoffs getankt. Während des anschließenden Betriebs des Kraftfahrzeugs 11 stellt der Vergleicher 16 fest, ob das aktuell ermittelte Gewichtssignal 24 mit dem von Referenzgewichtsgeber 25 bereitgestellten Referenzsignal wieder übereinstimmt. Falls dies der Fall ist, ist das vorgegebene Kraftstoffvolumen aufgebraucht. Der Vergleicher 26 gibt daraufhin ein Ausgangssignal an den Integrator 20 ab. Der Integrator, der über das Schaltsignal 28 zu Beginn der Messung zurückgesetzt wurde, hat während der laufenden Messung aus dem Drehzahlsignal 18 den vom Kraftfahrzeug 11 auf der ersten Walze 13 zurückgelegten Weg durch Integration des Drehzahlsignals 18 ermittelt. Das vom Vergleicher 26 abgegebene Signal stoppt den Integrationsvorgang. Das Ausgangssignal 29 des Integrators 20 ist ein Maß für den Weg, das der Durchschnittsverbrauchsermittlung 30 zugeleitet wird. Die Durchschnittsverbrauchsermittlung 30 teilt das vom Kraftstoffvolumengeber 31 zur Verfügung gestellte Signal durch das Ausgangssignal 29 des Integrators 20 und ermittelt somit das verbrauchte Kraftstoffvolumen bezogen auf den Weg. Das Ergebnis ist das Durchschnittsverbrauchssignal 33.

Der Kraftstoffvolumengeber 31 gibt das Volumen vor, das zuvor in den Kraftstoffbehälter 15 zu Beginn der Messung gefüllt wurde. Gegebenenfalls ist das Volumen variabel, so daß der Kraftstoffvolumengeber eine entsprechende Einstellmöglichkeit aufweist. In einer Weiterbildung kann vorgesehen sein, daß der Kraftstoffvolumengeber als Integrator aufgebaut ist, der aus der Integration des Gewichtssignals 24 das verbrauchte Volumen des Kraftstoffs ermittelt.

Eine bevorzugte Ausgestaltung des erfindungsgemäßen Verfahrens sieht vor, daß zu Beginn der Kraftstoffverbrauchsmessung das Gewicht des Kraftfahrzeugs 11 mit dem Zusatzgewicht 16 auf ein bekanntes vorgegebenes Maß erhöht wird. Das Belasten des Kraftfahrzeugs 11 mit dem bekannten Zusatzgewicht 16 weist den besonderen Vorteil auf, daß jegliches Hantieren min Kraftstoff entfällt. Zurückgegriffen werden kann auf den ohnehin im Kraftstoffbehälter 15 vorhandenen Kraftstoff. Zu Beginn der Messung wird das Fahrzeug ohne das Zusatzgewicht 16 gewogen. Der Meßbeginn wird über die Eingabe 27 durch das Schaltsignal 28 ausgelöst. Anschließend wird das Zusatzgewicht 16 angebracht. Der Vergleicher 26 gibt das Ausgangssignal an den Integrator 20 wieder dann ab, wenn das Gewicht des verbrauchten Kraftstoffs dem Gewicht des Zusatzgewichts 16 entspricht. Das Gewicht des Zusatzgewichts 16 entspricht um so genauer dem Gewicht des verbrauchten Kraftstoffs, je näher das Zusatzgewicht dem Schwerpunkt des Kraftstoffs im Kraftstoffbehälter 15 liegt. Eine bevorzugte Ausgestaltung sieht deshalb vor, daß das Zusatzgewicht 16 im Kraftstoffbehälter 15 des Kraftfahrzeugs 11 angeordnet wird. Falls das Zusatzgewicht 16 weiter entfernt vom Schwerpunkt des Kraftstoffs im Kraftstoffbehälter 15 liegt, kann anhand einer Kalibriermessung die Abweichung bei der Gewichtsänderung festgestellt und bei der späteren Auswertung berücksichtigt werden. Sofern die Waage derart ausgestaltet ist, daß sie das Gewicht des Kraftfahrzeugs vollständig erfaßt, kann das Zusatzgewicht 16 an einer beliebigen Stelle am oder im Kraftfahrzeug 11 angeordnet werden.

## Patentansprüche

1. Verfahren zur Bestimmung des Kraftstoffverbrauchs von Kraftfahrzeugen, dadurch gekennzeichnet, daß eine Gewichtsänderung des Kraftfahrzeugs (11) als Maß für den Verbrauch erfaßt wird.

2. Verfahren nach Anspruch 1, dadurch gekennzeichnet, daß vor Beginn der Verbrauchsmessung zunächst zumindest ein Teil des Kraftfahrzeuggewichts erfaßt wird, daß anschließend ein vorgegebenes Volumen an Kraftstoff getankt wird und daß das Kraftfahrzeug anschließend so lange betrieben wird, bis das Ausgangsgewicht wieder erreicht ist.

3. Verfahren nach Anspruch 1, dadurch gekennzeichnet, daß vor Beginn der Kraftstoffverbrauchsmessung zumindest ein Teil des Kraftfahrzeuggewichts (11) erfaßt wird, daß anschließend das Kraftfahrzeug (11) mit einem vorgegebenen Zusatzgewicht (16) belastet wird und daß anschließend das Kraftfahrzeug (11) für die Verbrauchsmessung betrieben wird bis das Ausgangsgewicht wieder erreicht ist.

4. Verfahren nach Anspruch 3, dadurch gekennzeichnet, daß das Zusatzgewicht (16) in einem Kraftstoffbehälter (15) des Kraftfahrzeugs (11) angeordnet wird.

5. Verfahren nach Anspruch 1, dadurch gekennzeichnet, daß die Gewichtsänderung des Kraftfahrzeugs (11) in einem Prüfstand (12) erfaßt wird.

6. Verfahren nach Anspruch 5, dadurch gekennzeichnet, daß als Prüfstand (12) ein Rollenprüfstand vorgesehen ist.

7. Verfahren nach Anspruch 1, dadurch gekennzeichnet, daß der Kraftstoffverbrauch des Kraftfahrzeugs (11) bezogen auf den Weg ermittelt wird.

8. Verfahren nach Anspruch 1, dadurch gekennzeichnet, daß der Kraftstoffverbrauch des Kraftfahrzeugs (11) bezogen auf die Geschwindigkeit ermittelt wird.

9. Verfahren nach Anspruch 1, dadurch gekennzeichnet, daß der Kraftstoffverbrauch des Kraftfahrzeugs (11) bezogen auf die abgegebene Leistung ermittelt wird.
